# EUROPEAN PATENT APPLICATION

(11) **EP 4 507 270 A1**
(43) Date of publication of application: **12.02.2025**
(21) Application number: 23794746.0
(22) Date of filing: 28.02.2023
(51) Int. Cl.: H04L 45/60

(54) **COMMUNICATION CHIP AND DATA SWITCHING APPARATUS**

(30) Priority: 29.04.2022 CN 202210474945
(71) Applicant: Huawei Technologies Co., Ltd., Shenzhen, Guangdong 518129 (CN)
(72) Inventor: ZHANG, Xianfu, Shenzhen, Guangdong 518129 (CN); LI, Xinhui, Shenzhen, Guangdong 518129 (CN); LV, Chao, Shenzhen, Guangdong 518129 (CN)
(74) Representative: Goddar, Heinz J.
(86) International application number: PCT/CN2023/078852
(87) International publication number: WO 2023/207310

(57) **Abstract**

A communication chip and a data switching apparatus are provided, which relate to the field of communication technologies, to reduce power consumption, costs, and a size of a data switching network. The communication chip includes a switching die and a plurality of network processing dies. Any one of the plurality of network processing dies is configured to: receive a first packet outside the communication chip through an external port, obtain destination information of the first packet, and send a second packet including the first packet and the destination information through an internal port. The destination information indicates a destination network processing die of the first packet. The switching die is configured to: receive the second packet, and send the second packet to a first network processing die in the plurality of network processing dies based on the destination information. The first network processing die is configured to: receive the second packet, and send the second packet outward through the external port, or send the second packet to another network processing die through the internal port.

## Description

This application claims priority to Chinese Patent Application No. 202210474945.1, filed with the China National Intellectual Property Administration on April 29, 2022 and entitled "COMMUNICATION CHIP AND DATA SWITCHING APPARATUS", which is incorporated herein by reference in its entirety.

### TECHNICAL FIELD

This application relates to the field of communication technologies, and in particular, to a communication chip and a data switching apparatus.

### BACKGROUND

A router (router) is a hardware device connecting two or more networks and serving as a gateway, and can read a destination address in a data packet and determine how to transfer the data packet. The router can identify different network protocols, translate destination addresses of data packets of different network protocols, and transfer the data packets to specified locations along optimal routes according to corresponding routing algorithms.

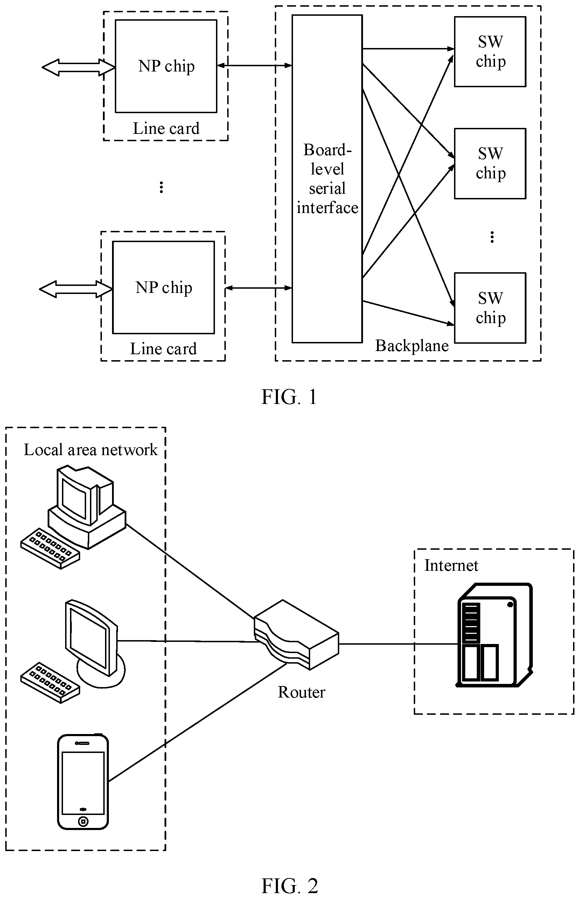

Currently, as shown in FIG. 1, the router includes a plurality of network processing (network processing, NP) chips (chips) and a plurality of switching (switching, SW) chips. The plurality of NP chips are respectively disposed on a plurality of line cards (line card, LC), and the plurality of switching chips are disposed on a backplane (backplane, BP), on which a board-level serial (SerDes) interface is further disposed. The plurality of line cards are connected to the plurality of switching chips on the backplane through the board-level serial interface. The NP chip may be configured to receive data from an external network and forward the data to the switching chip, or receive data output by the switching chip and forward the data to the external network. The switching chip is configured to: receive the data forwarded by the NP chip, perform data switching, and send the data to a corresponding NP chip.

However, the manner of connecting the plurality of line cards to the plurality of switching chips on the backplane through the board-level serial interface causes high power consumption, high costs, and the router with a large size.

### SUMMARY

This application provides a communication chip and a data switching apparatus, to reduce power consumption, costs, and a size of a data switching network.

To achieve the foregoing objective, this application uses the following technical solutions.

According to a first aspect, a communication chip is provided. The communication chip includes a switching die and a plurality of network processing dies, and any one of the plurality of network processing dies includes an external port, and an internal port connected to another network processing die or the switching die. The any one of the plurality of network processing dies is configured to: receive a first packet outside the communication chip through the external port, obtain destination information of the first packet, and send a second packet through the internal port. The second packet includes the first packet and the destination information, and the destination information indicates a destination network processing die of the first packet. The switching die is configured to: receive the second packet from the network processing die, and send the second packet to a first network processing die in the plurality of network processing dies based on the destination information. The first network processing die is configured to: receive the second packet from the switching die, and send the second packet outward through the external port, or send the second packet to the another network processing die through the internal port.

In the foregoing technical solution, the communication chip includes the switching die and the plurality of network processing dies, and the switching die and the plurality of network processing dies may be connected inside the communication chip. In addition, the plurality of network processing dies may be configured to receive a packet outside or send a packet outward, and the switching die may be configured to implement packet switching, so that data switching can be implemented inside the communication chip. In comparison with a data switching network including a plurality of network processing chips and a plurality of switching chips in conventional technologies, the communication chip in this application is greatly reduced in a size and power consumption, and heat dissipation costs and deployment space of a device using the communication chip can be reduced, to meet current requirements for green, low-carbon, and sustainable development.

In a possible implementation of the first aspect, the switching die is further configured to: after receiving the second packet, send path indication information to the first network processing die. The path indication information indicates a sending path of the second packet. The first network processing die is further configured to: receive the path indication information, and send the second packet outward based on the path indication information through the external port, or send the second packet to the another network processing die through the internal port based on the path indication information. In the foregoing possible implementation, the switching die controls the sending path of the second packet, to control the first network processing die to forward the packet to the destination network processing die.

In a possible implementation of the first aspect, the first network processing die includes a first selector switch, the first selector switch includes a connection end, a first selection end, and a second selection end, the connection end of the first selector switch is connected to the switching die, the first selection end of the first selector switch is connected to the external port, and the second selection end of the first selector switch is connected to the internal port. The first network processing die is further configured to: when sending the packet outward based on the path indication information through the external port, connect the connection end of the first selector switch and the first selection end of the first selector switch; or the first network processing die is further configured to: when forwarding the packet to the another network processing die through the internal port based on the path indication information, connect the connection end of the first selector switch and the second selection end of the first selector switch. In the foregoing possible implementation, the switching die controls different selection ends of the first selector switch in the first network processing die, to control the first selector switch to forward the packet to the destination network processing die.

In a possible implementation of the first aspect, the first selector switch includes at least two second selection ends, the at least two second selection ends are respectively connected to at least two internal ports of the first network processing die, and the at least two internal ports are respectively connected to at least two of the plurality of network processing dies. The first network processing die is further configured to: when forwarding the packet to the another network processing die through the internal port based on the path indication information, connect the connection end of the first selector switch and the second selection end that corresponds to the sending path and that is indicated by the path indication information. In the foregoing possible implementation, the switching die controls different selection ends of the first selector switch in the first network processing die, to select different transmission paths to forward the packet to the destination network processing die.

In a possible implementation of the first aspect, the destination network processing die is not connected to the switching die, and at least two first network processing dies in the plurality of network processing dies are all connected to the switching die and the destination network processing die. The switching die is further configured to: when sending the second packet, send the second packet to one of the at least two first network processing dies. In the foregoing possible implementation, when the destination network processing die is indirectly connected to the switching die, the switching die can select the first network processing die configured to forward the second packet, so that a problem that a transmission delay of the packet is long due to congestion of some transmission paths can be avoided.

In a possible implementation of the first aspect, at least one second network processing die in the plurality of network processing dies is not connected to the switching die. The second network processing die is specifically configured to: after receiving the first packet through the external port, when sending the second packet through the internal port, send the second packet to a third network processing die through the internal port, where the third network processing die is connected to the switching die. The third network processing die is configured to: receive the second packet, and forward the second packet to the switching die. In the foregoing possible implementation, when the second network processing die is indirectly connected to the switching die, and the second network processing die is connected to the switching die via the third network processing die, the second network processing die forwards the second packet to the switching die via the third network processing die. In this way, in comparison with the conventional technologies, in the data switching network in this application, no corresponding tracing needs to be disposed on a backplane, and the transmission path can be shortened, thereby reducing a delay and power consumption for transmitting the packet and the destination information.

In a possible implementation of the first aspect, there are at least two third network processing dies in the plurality of network processing dies. The second network processing die is specifically configured to: when sending the second packet to the third network processing die through the internal port, send the second packet to one of the at least two third network processing dies. In the foregoing possible implementation, when the second network processing die is indirectly connected to the switching die, and the second network processing die is coupled to the switching die via the at least two third network processing dies, the second network processing die can select the third network processing die configured to forward the second packet, so that a problem that a transmission delay of the packet is long due to congestion of some transmission paths can be avoided.

In a possible implementation of the first aspect, the second network processing die further includes a second selector switch, the second selector switch includes a connection end and at least two selection ends, the connection end of the second selector switch is connected to the external port, and the at least two selection ends of the second selector switch are respectively connected to the at least two third network processing dies. The second network processing die is further specifically configured to connect the connection end of the second selector switch and one of the at least two selection ends, to send the second packet to one third network processing die selected from the at least two third network processing dies. In the foregoing possible implementation, when forwarding the second packet, the second network processing die may select different selection ends of the second selector switch, to select different third network processing dies to forward the packet to the switching die.

In a possible implementation of the first aspect, the second network processing die is further configured to: when the destination network processing die is the second network processing die, send the first packet through the external port. In the foregoing possible implementation, when the second network processing die receives the first packet through the external port, if the second network processing die is the destination network processing die of the first packet, the first packet is sent through the external port, so that a transmission delay of the first packet can be reduced.

In a possible implementation of the first aspect, the switching die and the plurality of network processing dies are located in a same wafer. In the foregoing possible implementation, integration of the switching die and the plurality of network processing dies can be improved, thereby further reducing the size and power consumption of the communication chip.

In a possible implementation of the first aspect, the communication chip further includes at least one storage die, and the any one of the plurality of network processing dies is coupled to one or more of the at least one storage die. In the foregoing possible implementation, the network processing die is coupled to the one or more storage dies, so that in a data switching process, the storage die may be configured to buffer a corresponding switching packet, thereby improving a data switching capability of the communication chip to some extent.

According to a second aspect, a data switching apparatus is provided. The data switching apparatus includes a backplane and at least one communication chip disposed on the backplane, and the communication chip is the communication chip according to the first aspect or any one of the possible implementations of the first aspect.

In a possible implementation of the second aspect, the data switching apparatus includes a switching box or a switching frame.

In a possible implementation of the second aspect, when the data switching apparatus includes the switching frame, the switching frame includes at least one line card corresponding to the at least one communication chip, and the at least one communication chip is disposed on the backplane respectively via the at least one line card.

According to a third aspect, a switching device is provided. The switching device includes the data switching apparatus according to the second aspect or any one of the possible implementations of the second aspect.

It may be understood that, for beneficial effect that can be achieved by any data switching apparatus and switching device provided above, correspondingly refer to beneficial effect in the communication chip provided above. Details are not described herein again.

### BRIEF DESCRIPTION OF DRAWINGS

FIG. 1 is a diagram of a structure of a router according to conventional technologies;
FIG. 2 is an application diagram of a data switching network according to an embodiment of this application;
FIG. 3 is a diagram of a structure of a data switching network according to an embodiment of this application;
FIG. 4 is a diagram of a structure of a communication chip according to an embodiment of this application;
FIG. 5 is a diagram of a structure of another communication chip according to an embodiment of this application;
FIG. 6 is a diagram of a structure of still another communication chip according to an embodiment of this application;
FIG. 7 is a diagram of a structure of another communication chip according to an embodiment of this application;
FIG. 8 is a diagram of a structure of still another communication chip according to an embodiment of this application;
FIG. 9 is a diagram of data switching according to an embodiment of this application;
FIG. 10 is a diagram of other data switching according to an embodiment of this application; and
FIG. 11 is a diagram of a structure of another communication chip according to an embodiment of this application.

### DESCRIPTION OF EMBODIMENTS

The following describes the technical solutions in embodiments of this application with reference to the accompanying drawings in embodiments of this application. In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural. In addition, in embodiments of this application, the terms such as "first" and "second" do not limit a quantity or an execution sequence.

It should be noted that in this application, the term like "example" or "for example" represents giving an example, an illustration, or a description. Any embodiment or design scheme described as an "example" or "for example" in this application should not be explained as being more preferred or having more advantages than another embodiment or design scheme. Exactly, use of the word like "example" or "for example" is intended to present a related concept in a specific manner.

The technical solutions provided in embodiments of this application may be used in a plurality of different data switching networks. The data switching network may also be referred to as a data switching system, configured to implement data switching between different devices in a same data network, or implement data switching between different data networks. The data switching network may be a switch, a router, or a switching network including a plurality of switches or routers. For example, as shown in FIG. 2, different data networks may include a local area network and the Internet. The local area network and the Internet may perform data switching via the router. The local area network may include terminal devices such as a mobile phone, a tablet computer, and a personal computer. The Internet may include one or more servers. The following describes a structure of the data switching network by using an example.

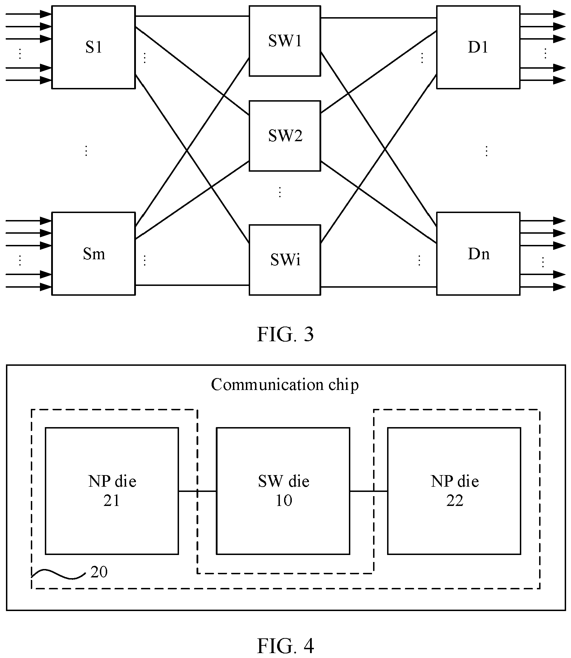

FIG. 3 is a diagram of a structure of an m×n (both m and n are integers greater than 1) data switching network according to an embodiment of this application. The data switching network includes m source nodes (source, S), n destination nodes (destination, D), and at least one switching node (switching, SW) located between the m source nodes S and the n destination nodes. In FIG. 3, the m source nodes S are represented as S1 to Sm, and the n destination nodes D are represented as D1 to Dn. An example in which the at least one switching node SW includes a plurality of switching nodes, which are represented as SW1 to SWi is used for description.

**In** the data switching network, each of the m source nodes S and the n destination nodes D may include one or more ports. For the source node S, the one or more ports are input ports (input ports). The input port may be configured to: receive a data packet or cell outside the switching system, and send the data packet or cell to the at least one switching node SW. The at least one switching node SW may be configured to: perform switching based on destination information (for example, information like a destination IP address, a destination port, or a destination node) of the received data packet or cell, and send the switched data packet or cell to a corresponding destination node D. For the destination node D, the one or more ports are output ports (output ports), configured to send, outside the switching system, a data packet or cell that has been switched.

Optionally, the data switching network may be configured to implement switching of a variable-length data packet (variable-length data packet), or may be configured to implement switching of a fixed-length cell (cell). Further, when receiving a data packet, the source node S may maintain an original format of the variable-length data packet for sending the data packet, or may split the data packet into cells (cells) for sending. If the source node S sends the data packet by splitting the data packet into the cells, the destination node D may reassemble all the cells into the complete data packet after receiving all the cells.

It should be noted that, in FIG. 3, an example in which the source node S and the destination node D are two independent nodes is used for description. In actual application, the source node S and the destination node D may alternatively be a same node and have both the input port and the output port. FIG. 3 constitutes no limitation on embodiments of this application.

In embodiments of this application, the source node S, the destination node D, and the switching node SW may be dies (dies). For example, the source node S and the destination node D may be network processing (network processing, NP) dies (which may also be referred to as NP dies), and the switching node SW may be a switching die (which may also be referred to as an SW die). Therefore, the data switching network may be a communication chip (chip) including a plurality of NP dies and one or more SW dies, or a chip set obtained by combining and packaging a plurality of such communication chips. The following describes a structure of the communication chip in detail.

FIG. 4 is a diagram of a structure of a communication chip according to an embodiment of this application. The communication chip includes an SW die 10 and a plurality of NP dies 20. Any one of the plurality of NP dies 20 may be directly or indirectly connected to the SW die 10. Optionally, each NP die includes an internal port and an external port. The external port is configured to receive a packet from an outside or send a packet to an outside. The internal port is configured to connect to another NP die and/or SW die.

The die may also be referred to as a bare chip or a bare die, so that the SW die may also be referred to as an SW bare chip or an SW bare die, and the NP die may also be referred to as an NP bare chip or an NP bare die. Optionally, the SW die 10 and the plurality of NP dies 20 may be a plurality of independent dies cut from a wafer (wafer), or may be a plurality of uncut dies located on a same wafer.

In addition, for each of the plurality of NP dies 20, when the NP die is used to receive a packet outside, the NP die may be referred to as a source NP die, and when the NP die is a destination NP die of a packet, the NP die may be referred to as a destination NP die. A source NP die and a destination NP die of a same packet may be a same NP die, or may be different NP dies.

The any one (which may also be referred to as a second NP die, and the second NP die is represented as an NP die 21 hereinafter) of the plurality of NP dies is configured to: receive a first packet outside the communication chip through the external port, obtain destination information of the first packet, and send a second packet through the internal port. The second packet includes the first packet and the destination information, and the destination information indicates a destination network processing die of the first packet. For example, the NP die 21 includes the external port (which may also be referred to as an input port), and may be configured to: receive a packet outside the communication chip through the external port, and parse a destination address or a destination port of the packet, to determine destination information based on the destination address or the destination port. The destination information may be an identifier of a destination NP die corresponding to the destination address or the destination port.

The SW die 10 is configured to: receive the second packet from the NP die, and send the second packet to a first NP die 22 in the plurality of network processing dies 20 based on the destination information. The SW die 10 may include a plurality of switch ports, the plurality of switch ports may be separately connected to different NP dies, and the SW die 10 may switch a packet received by one switch port to another switch port for output, to switch a packet from one NP die to another NP die. For example, the SW die 10 includes a first switch port connected to the NP die 21 and a second switch port connected to the first NP die 22. The SW die 10 receives the second packet through the first switch port, and determines, based on the destination information, that the second packet needs to be switched to the second switch port, to switch the second packet to the second switch port for output and send the second packet to the first NP die 22.

The first NP die 22 is configured to: receive the second packet from the SW die 10, and send the second packet outward through the external port, or send the second packet to another network processing die through the internal port. For example, the first NP die 22 includes the external port (which may also be referred to as an output port). When the first NP die 22 receives the second packet, if the destination NP die of the first packet is the first NP die 22, the first NP die 22 sends the second packet outward through the external port, to send the switched second packet. If the destination NP die of the first packet is not the first NP die 22, the first NP die 22 sends the second packet to the another network processing die through the internal port.

Optionally, the NP die 21 may be directly connected to the SW die 10, or may not be directly connected to the SW die 10. When the NP die 21 is directly connected to the SW die 10, the NP die 21 may directly send the second packet to the SW die 10. When the NP die 21 is indirectly connected to the SW die 10, the NP die 21 may send the second packet to the another NP die that is connected to the SW die, to send the second packet to the SW die 10 via the another NP die. There may be one or more NP dies in a transmission path between the NP die 21 and the SW die. This is not specifically limited in embodiments of this application. In FIG. 4, an example in which the NP die 21 is directly connected to the SW die 10 is used for description.

Similarly, the first NP die 22 may be the destination NP die of the first packet, or may not be the destination NP die of the first packet. In other words, the destination NP die of the first packet may be directly connected to the SW die 10, or may not be directly connected to the SW die 10. When the first NP die 22 is the destination NP die of the first packet, that is, when the destination NP die is directly connected to the SW die 10, the SW die 10 may directly send the second packet to the destination NP die. When the first NP die 22 is not the destination NP die of the first packet, that is, when the destination NP die is indirectly connected to the SW die 10, the SW die 10 may send the second packet to the destination NP die via the first NP die 22, where the first NP die 22 is connected to the SW die 10. There may be one or more NP dies in a transmission path between the SW die 10 and the destination NP die. This is not specifically limited in embodiments of this application.

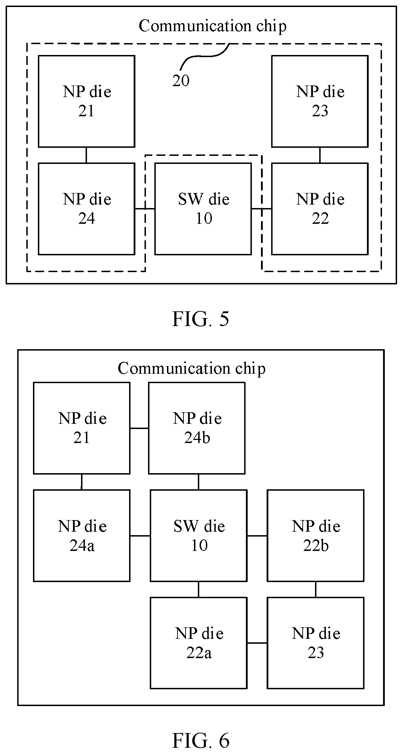

The following describes, by using FIG. 5 and FIG. 6, a case in which the NP die 21 is indirectly connected to the SW die 10, and a case in which the destination NP die is indirectly connected to the SW die 10.

### 1. Case in which the destination NP die is indirectly connected to the SW die 10

In a possible embodiment, as shown in FIG. 5, the plurality of NP dies 20 further include an NP die 23 used as the destination NP die, and the NP die 23 is separately connected to the first NP die 22 and the SW die 10. The first NP die 22 is specifically configured to: receive the second packet from the SW die 10, and forward the second packet to the NP die 23 through the internal port. To be specific, when the SW die 10 sends the second packet to the NP die 23, the SW die 10 may send the second packet to the first NP die 22. After receiving the second packet, the first NP die 22 may forward the second packet to the NP die 23.

In another possible embodiment, as shown in FIG. 6, there are at least two first NP dies 22 in the plurality of NP dies 20, and the NP die 23 may be connected to the SW die 10 via any one of the at least two first NP dies 22. In other words, there are a plurality of transmission paths between the NP die 23 and the SW die 10. In FIG. 6, an example in which the at least two first NP dies 22 include two first NP dies that are denoted as: 22a and 22b is used for description.

In this case, the SW die 10 is further configured to select one first NP die 22 from the at least two first NP dies 22 to send the second packet. In other words, the SW die 10 may be configured to select one of the plurality of transmission paths between the SW die 10 and the NP die 23. Correspondingly, the selected first NP die 22 is specifically configured to: receive the second packet sent by the SW die 10, and forward the second packet to the NP die 23.

Optionally, when there are the plurality of transmission paths between the NP die 23 and the SW die 10, the SW die 10 may select, according to a specific flow control policy, the one of the plurality of transmission paths to transmit the packet. For example, the flow control policy may include that one data flow is transmitted through one transmission path, or one data flow is transmitted through a plurality of transmission paths in a load balancing manner. This is not specifically limited in embodiments of this application.

In the foregoing two possible embodiments, the first NP die 22 may be configured to send the packet outward through the external port, or may be configured to send the second packet to the another network processing die through the internal port. To ensure that the first NP die 22 can correctly transmit the second packet, the SW die 10 is further configured to send path indication information to the first NP die 22, where the path indication information indicates a sending path of the second packet. Correspondingly, the first NP die 22 is further configured to: receive the path indication information, and send the second packet outward based on the path indication information through the external port, or send the second packet to the another NP die through the internal port based on the path indication information. Further, when there are a plurality of NP dies in the transmission path between the SW die 10 and the destination NP die, the path indication information may indicate a sending path of the second packet in the plurality of NP dies, that is, the plurality of NP dies may forward the second packet based on the path indication information until the second packet is forwarded to the destination NP die.

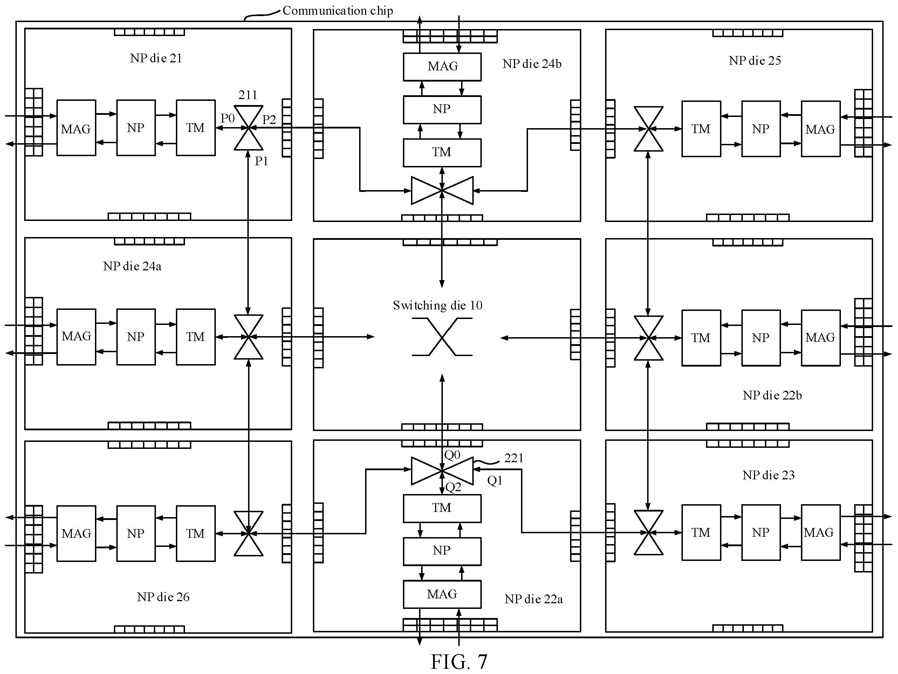

For example, as shown in FIG. 7, the first NP die 22a includes a first selector switch 221. The first selector switch 221 includes a connection end Q0, a first selection end Q1, and a second selection end Q2. The connection end Q0 of the first selector switch 221 is connected to the SW die 10. The first selection end Q1 and the second selection end Q2 of the first selector switch 221 are respectively connected to the external port of the first NP die 22a and the NP die 23. In FIG. 7, a structure of the first selector switch 221 is described by using the first NP die 22a as an example.

Optionally, the first selector switch 221 may further include at least two second selection ends Q2, the at least two second selection ends Q2 are respectively connected to at least two internal ports of the first NP die 22, and the at least two internal ports are respectively connected to at least two of the plurality of NP dies 20. In this case, the first NP die 22 is further configured to: when forwarding the second packet to the another NP die through the internal port based on the path indication information, connect the connection end of the first selector switch 221 and the second selection end Q2 that corresponds to the sending path and that is indicated by the path indication information.

### 2. Case in which the NP die 21 is indirectly connected to the SW die 10

In a possible embodiment, as shown in FIG. 5, the plurality of NP dies 20 further include an NP die 24 (which may also be referred to as a third NP die) directly connected to both the SW die 10 and the NP die 21, and the NP die 21 is connected to the SW die 10 via the NP die 24.

The NP die 24 is configured to: receive the second packet from the NP die 21, and forward the second packet to the SW die 10. To be specific, when the NP die 21 sends the second packet to the SW die 10, the NP die 21 may send the second packet to the NP die 24. After receiving the second packet, the NP die 24 may forward the second packet to the SW die 10.

In another possible embodiment, as shown in FIG. 6, there are at least two NP dies 24 in the plurality of NP dies, and the NP die 21 is connected to the SW die 10 via any one of the at least two NP dies 24. In other words, there are a plurality of transmission paths between the NP die 21 and the SW die 10. In FIG. 6, an example in which the at least two NP dies 24 include two NP dies that are denoted as: 24a and 24b is used for description.

In this case, the NP die 21 is further configured to: when sending the second packet, send the second packet to one of the at least two NP dies 24. In other words, the NP die 21 may be configured to select one of the plurality of transmission paths between the NP die 21 and the SW die 10. Correspondingly, the selected NP die 24 is configured to: receive the second packet sent by the NP die 21, and forward the second packet to the SW die 10.

Optionally, when there are the plurality of transmission paths between the NP die 21 and the SW die 10, the NP die 21 may select, according to a specific flow control policy, the one of the plurality of transmission paths to transmit the second packet. For example, the flow control policy may include that one data flow is transmitted through one transmission path, or one data flow is transmitted through a plurality of transmission paths in a load balancing manner. This is not specifically limited in embodiments of this application.

The following describes a specific structure of the NP die 21 by using an example. In an example, as shown in FIG. 7, when the NP die 21 is separately connected to the SW die 10 via the at least two NP dies 24 (for example, the NP die 24a and the NP die 24b), the NP die 21 may include a second selector switch 211. The second selector switch 211 includes a connection end P0 and at least two selection ends P1 to Pi (i is a positive integer greater than 1). The connection end P0 of the second selector switch 211 is connected to the external port of the NP die 21. The at least two selection ends P1 to Pi of the second selector switch 211 are respectively connected to the at least two NP dies 24. In FIG. 7, an example in which the at least two NP dies 24 include the two NP dies that are denoted as: 24a and 24b, the at least two selection ends P1 to Pi include two selection ends that are denoted as: P1 and P2, the NP die 24a is connected to the selection end P1, and the NP die 24b is connected to the selection end P2 is used for description.

Specifically, the NP die 21 is further configured to control the connection end P0 of the second selector switch 211 to be turned on with one of the at least two selection ends P1 to Pi of the second selector switch 211, to select one of the at least two NP dies 24 to send the second packet. For example, with reference to FIG. 7, the NP die 21 may be configured to control the connection end P0 of the second selector switch 211 to be turned on with the selection end P1 of the second selector switch 211, to select the NP die 24a from the NP die 24a and the NP die 24b to send the second packet. In other words, the NP die 21 selects to forward the second packet to the SW die 10 via the NP die 24a.

Optionally, in addition to including the selector switch, the NP die 21 and the first NP die 22 may further include other functional units. For example, the NP die 21 and the first NP die 22 may further include a media access control (media access control) aggregation (aggregation) unit, a network processor (network processor, NP), and a traffic manager (traffic manager, TM). The media access control aggregation unit may be referred to as an MAG for short. The MAG may be configured to: sense an optical signal or an electrical signal, forward the optical signal or the electrical signal as a data frame (that is, a packet), and perform validity check on the data frame. Uplink processing of the NP may include packet parsing, data stream analysis, packet forwarding, mapping a MAC/IP address to a TM queue number, and the like. Downlink processing of the NP may include packet encapsulation, egress processing, and the like. The TM may be configured to: provide functions such as large-capacity memory, congestion avoidance, traffic shaping, multilevel traffic scheduling, and traffic congestion control, and map the TM queue number to an identifier of a destination NP die.

Similarly, the NP die 23 or the NP die 24 may also include the media access control aggregation unit MAG, the network processor NP, and the traffic manager TM. Further, when the NP die 23 or the NP die 24 may not only be configured to receive a packet outside or forward a packet outward, but also be configured to forward a packet for the another NP die or the SW die 10, the NP die may further include a selector switch similar to the first selector switch 221 or the second selector switch 211. This is not specifically limited in embodiments of this application.

Moreover, in addition to the NP die 21 to the NP die 24, the plurality of NP dies 20 may further include more other NP dies. In FIG. 7, an example in which the plurality of NP dies 20 include eight NP dies, each NP die includes the selector switch, the MAG, the NP, and the TM, and the other NP dies further include an NP die 25 and an NP die 26 is used for description.

It should be noted that the foregoing related descriptions of the NP die 21 to the NP die 24 are all described by using different angles of the NP dies in data switching as examples. In the communication chip, any one of the plurality of NP dies 10 may perform a function of any one of the NP dies 21 to the NP die 24. This is specifically related to a packet that needs to be switched and a location (or referred to as a connection relationship) of the NP die inside the communication chip.

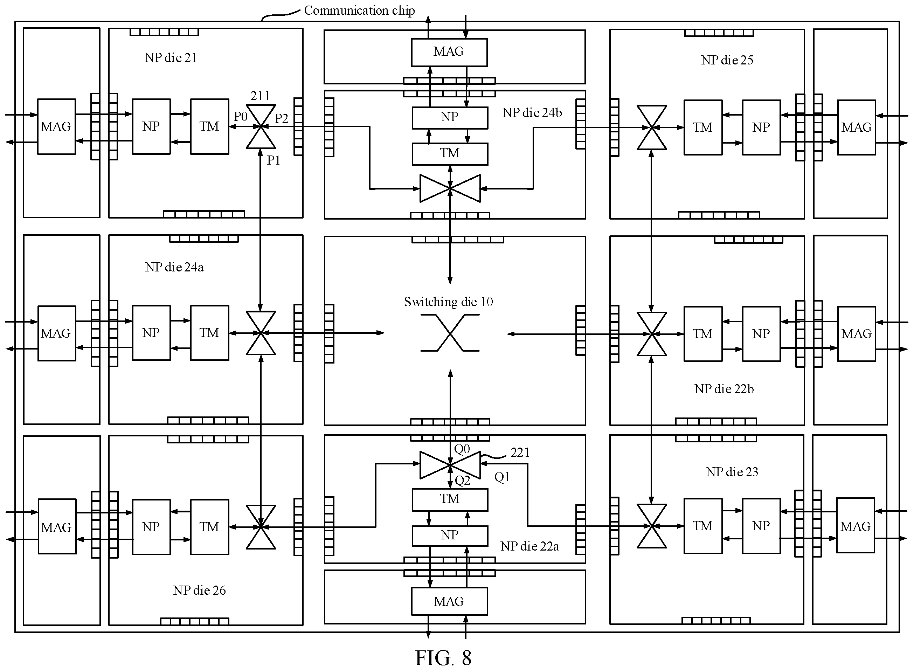

Optionally, when the NP die includes a plurality of different functional units such as the selector switch, the media access control aggregation unit MAG, the network processor NP, and the traffic manager TM, the NP die may alternatively be split into a plurality of different dies, and each die is configured to correspond to the foregoing one or more functional units. For example, with reference to FIG. 7, as shown in FIG. 8, each NP die may include two dies, and the two dies include a die corresponding to the MAG, and a die corresponding to the NP, the TM, and the selector switch.

Structures of the plurality of NP dies in embodiments of this application may be the same or may be different. When the structures of the plurality of NP dies are the same, the plurality of NP dies may be completely the same plurality of NP dies obtained through one tape-out process or same tape-out processes, NP dies at different locations in the communication chip may be obtained by configuring and rotating the plurality of NP dies. In this way, development costs of the NP dies can be greatly reduced.

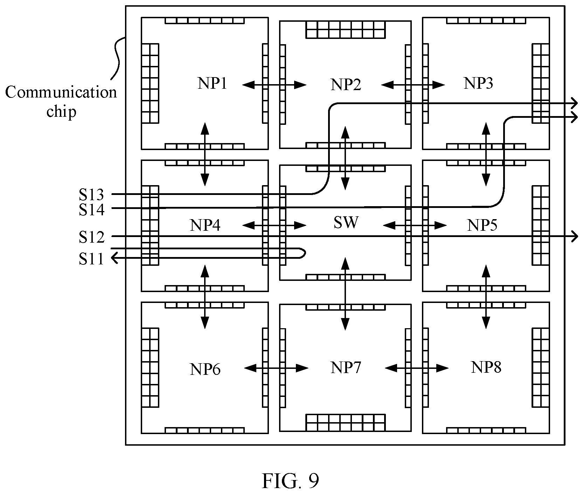

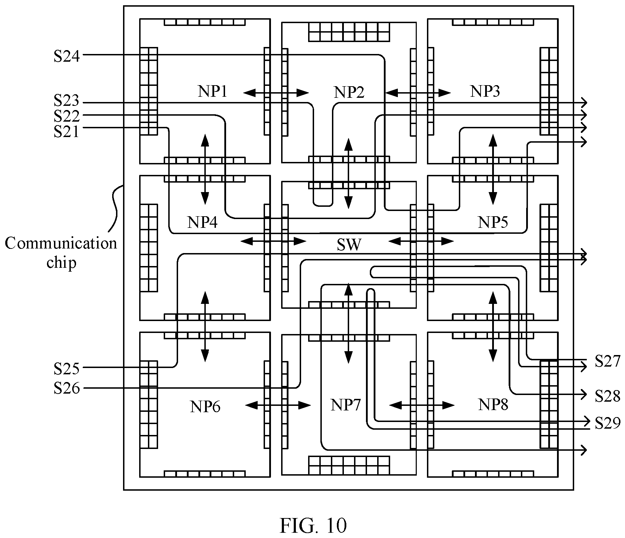

For ease of understanding, the following uses a communication chip shown in FIG. 9 and FIG. 10 as an example to describe functions of NP dies at different locations in the communication chip in a plurality of different switching paths. The NP dies at different locations may include an NP die (directly-connected NP die for short) that is directly connected to an SW die and an NP die (indirectly-connected NP die for short) that is indirectly connected to the SW die. In FIG. 9 and FIG. 10, the communication chip includes the SW die (represented as SW) and eight NP dies (represented as: NP1 to NP8). NP2, NP4, NP5, and NP7 are NP dies that are directly connected to the SW die, and NP1, NP3, NP6, and NP8 are NP dies that are indirectly connected to the SW die. NP1 is connected to the SW die via NP2 and NP4, NP3 is connected to the SW die via NP2 and NP5, NP6 is connected to the SW die via NP4 and NP7, and NP8 is connected to the SW die via NP5 and NP7.

In a possible example, as shown in FIG. 9, NP4 in the NP dies (NP2, NP4, NP5, and NP7) that are directly connected to the SW die is used as an example, and a possible switching path obtained when a source NP die is the directly-connected NP die is described by using an example. If a destination NP die is NP4, a switching path S11 of a packet is NP4-SW-NP4. If a destination NP die is another directly-connected NP die of the SW die, an example in which NP5 is the destination NP die is used, and a corresponding switching path S12 is NP4-SW-NP5. If a destination NP die is the indirectly-connected NP die of the SW die, an example in which NP3 is the destination NP die is used, and a corresponding switching path S13 is NP4-SW-NP2-NP3 or NP4-SW-NP5-NP3.

In another possible example, as shown in FIG. 10, NP1, NP6, and NP8 in the NP dies (NP1, NP3, NP6, and NP8) that are indirectly connected to the SW die are used as an example, and a possible switching path obtained when a source NP die is the indirectly-connected NP die is described by using an example. The source NP die is NP1. If a destination NP die is another indirectly-connected NP die, an example in which the another indirectly-connected NP die is NP3 is used. Therefore, a switching path S21 is NP1-NP4-SW-NP5-NP3, a switching path S22 is NP1-NP4-SW-NP2-NP3, a switching path S23 is NP1-NP2-SW-NP2-NP3, and a switching path S24 is NP1-NP2-SW-NP5-NP3. The source NP die is NP6. If a destination NP die is a directly-connected NP die, an example in which the directly-connected NP die is NP5 is used. Therefore, a switching path S25 is NP6-NP4-SW-NP5, and a switching path S26 is NP6-NP7-SW-NP5. The source NP die is NP8. If a destination NP die is NP8, a switching path S27 is NP8-NP5-SW-NP5-NP8, a switching path S28 is NP8-NP5-SW-NP7-NP8 and NP8-NP7-SW-NP5-NP8, and a switching path S29 is NP8-NP7-SW-NP7-NP8.

It should be noted that, in FIG. 9 and FIG. 10, an example in which when the source NP die and the destination NP die are a same NP die, a corresponding switching path needs to pass through the SW die is used for description. Optionally, when the source NP die and the destination NP die are the same NP die, the corresponding switching path may alternatively not pass through the SW die, and the packet is directly output from the NP die. For example, that both the source NP die and the destination NP die are NP4 is used as an example. When receiving the packet and determining that the destination NP die of the packet is NP4, NP4 may output the packet through a corresponding output port.

FIG. 4 to FIG. 10 are merely examples. When the communication chip is configured to implement large-capacity data switching, the communication chip may further include more NP dies and more SW dies, the more SW dies may be considered as a whole to implement a function similar to that of the SW die 10. The plurality of NP dies may be configured to receive the packet outside, or send the packet outward. Some of the plurality of NP dies may be further configured to forward a packet for another part of NP dies, to forward the packet received by the source NP die to the plurality of SW dies. Some of the plurality of NP dies may be further configured to forward a packet for the plurality of SW dies, to forward the packet to a destination NP die. An SW die in the plurality of SW dies may be configured to switch a packet, and different SW dies may be further configured to forward a packet.

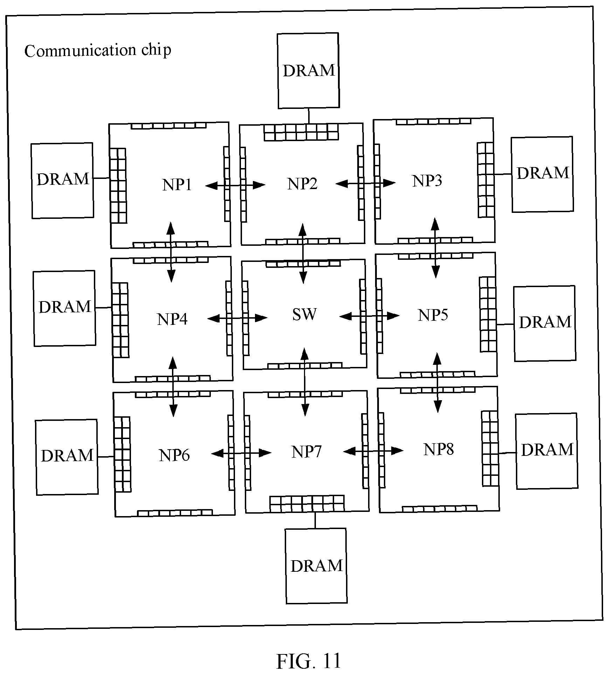

Further, the communication chip may further include at least one storage die, and any one of the plurality of NP dies is connected to one or more of the at least one storage die. For example, with reference to FIG. 10, as shown in FIG. 11, the at least one storage die includes eight storage dies, and each of the eight NP dies NP1 to NP8 is connected to one storage die. Optionally, a storage medium type of the storage die includes but is not limited to: a dynamic random access memory (dynamic random access memory, DRAM), a static random access memory (static random access memory, SRAM), a ferroelectric random access memory (ferroelectric random access memory, FeRAM), a magnetic random access memory (magnetic random access memory, MRAM), or the like. In FIG. 11, an example in which the storage medium type of the storage die is the DRAM is used for description.

When the at least one storage die includes the plurality of storage dies, storage medium types of the plurality of storage dies may be the same or different. When one NP die is coupled to a plurality of storage dies, storage medium types of the plurality of storage dies correspondingly coupled to the NP die may be the same or different. This is not specifically limited in embodiments of this application.

In embodiments of this application, the communication chip includes the SW die and the plurality of NP dies, and the SW die and the plurality of NP dies may be connected inside the communication chip. In addition, the plurality of NP dies may be configured to receive the packet outside or send the packet outward, and the SW die may be configured to implement packet switching, so that data switching can be implemented inside the communication chip. In comparison with a data switching network including a plurality of NP chips and a plurality of switching chips in conventional technologies, the communication chip in this application can be greatly reduced in a size and power consumption, and heat dissipation costs and deployment space of a device using the communication chip can be reduced, to meet current requirements for green, low-carbon, and sustainable development.

Based on this, an embodiment of this application further provides a data switching apparatus. The data switching apparatus includes a backplane and at least one communication chip disposed on the backplane, and the communication chip is any communication chip mentioned above. Optionally, the data switching apparatus may be a switching box or a switching frame. When the data switching apparatus is the switching box, the data switching apparatus may be in a single-device form and does not support capacity expansion, and therefore, no backplane interface may be disposed on the backplane. When the data switching apparatus is the switching frame, the data switching apparatus may not be in a single-device form and supports capacity expansion, and therefore, a corresponding backplane interface may be disposed on the backplane.

In an example, when the data switching apparatus is the switching frame, the switching frame includes at least one line card corresponding to the at least one communication chip, and the at least one communication chip is separately connected to the backplane interface on the backplane via the at least one line card, to dispose the at least one communication chip on the backplane.

Based on this, an embodiment of this application further provides a switching device. The switching device may be a router or a switch, and the switching device includes the data switching apparatus provided above.

It should be noted that all the foregoing detailed descriptions about the communication chip may be correspondingly cited in the data switching apparatus and the switching device. Details are not described in embodiments of this application again.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication chip, wherein the communication chip comprises a switching die and a plurality of network processing dies, and any one of the plurality of network processing dies comprises an external port, and an internal port connected to another network processing die or the switching die;
the any one of the plurality of network processing dies is configured to: receive a first packet outside the communication chip through the external port, obtain destination information of the first packet, and send a second packet through the internal port, wherein the second packet comprises the first packet and the destination information, and the destination information indicates a destination network processing die of the first packet;
the switching die is configured to: receive the second packet from the network processing die, and send the second packet to a first network processing die in the plurality of network processing dies based on the destination information; and
the first network processing die is configured to: receive the second packet from the switching die, and send the second packet outward through the external port, or send the second packet to the another network processing die through the internal port.

2. The communication chip according to claim 1, wherein
the switching die is further configured to: after receiving the second packet, send path indication information to the first network processing die, wherein the path indication information indicates a sending path of the second packet; and
the first network processing die is further configured to: receive the path indication information, and send the second packet outward based on the path indication information through the external port, or send the second packet to the another network processing die through the internal port based on the path indication information.

3. The communication chip according to claim 2, wherein the first network processing die comprises a first selector switch, the first selector switch comprises a connection end, a first selection end, and a second selection end, the connection end of the first selector switch is connected to the switching die, the first selection end of the first selector switch is connected to the external port, and the second selection end of the first selector switch is connected to the internal port; and
the first network processing die is further configured to: when sending the second packet outward based on the path indication information through the external port, connect the connection end of the first selector switch and the first selection end of the first selector switch; or
the first network processing die is further configured to: when forwarding the packet to the another network processing die through the internal port based on the path indication information, connect the connection end of the first selector switch and the second selection end of the first selector switch.

4. The communication chip according to claim 3, wherein the first selector switch comprises at least two second selection ends, the at least two second selection ends are respectively connected to at least two internal ports of the first network processing die, and the at least two internal ports are respectively connected to at least two of the plurality of network processing dies; and
the first network processing die is further configured to: when forwarding the packet to the another network processing die through the internal port based on the path indication information, connect the connection end of the first selector switch and the second selection end that corresponds to the sending path and that is indicated by the path indication information.

5. The communication chip according to any one of claims 1 to 4, wherein the destination network processing die is not connected to the switching die, and at least two first network processing dies in the plurality of network processing dies are all connected to the switching die and the destination network processing die; and
the switching die is further configured to: when sending the second packet, send the second packet to one of the at least two first network processing dies.

6. The communication chip according to any one of claims 1 to 5, wherein at least one second network processing die in the plurality of network processing dies is not connected to the switching die;
the second network processing die is specifically configured to: after receiving the first packet through the external port, when sending the second packet through the internal port, send the second packet to a third network processing die through the internal port, wherein the third network processing die is connected to the switching die; and
the third network processing die is configured to: receive the second packet, and forward the second packet to the switching die.

7. The communication chip according to claim 6, wherein there are at least two third network processing dies in the plurality of network processing dies; and
the second network processing die is specifically configured to: when sending the second packet to the third network processing die through the internal port, send the second packet to one of the at least two third network processing dies.

8. The communication chip according to claim 7, wherein the second network processing die further comprises a second selector switch, the second selector switch comprises a connection end and at least two selection ends, the connection end of the second selector switch is connected to the external port, and the at least two selection ends of the second selector switch are respectively connected to the at least two third network processing dies; and
the second network processing die is further specifically configured to connect the connection end of the second selector switch and one of the at least two selection ends, to send the second packet to one third network processing die selected from the at least two third network processing dies.

9. The communication chip according to claim 8, wherein
the second network processing die is further configured to: when the destination network processing die is the second network processing die, send the first packet through the external port.

10. The communication chip according to any one of claims 1 to 9, wherein the switching die and the plurality of network processing dies are located in a same wafer.

11. The communication chip according to any one of claims 1 to 10, wherein the communication chip further comprises a plurality of storage dies, and the any one of the plurality of network processing dies is connected to one or more of the plurality of storage dies.

12. A data switching apparatus, wherein the data switching apparatus comprises a backplane and at least one communication chip disposed on the backplane, and the communication chip is the communication chip according to any one of claims 1 to 11.

13. The apparatus according to claim 12, wherein the data switching apparatus comprises a switching box or a switching frame.

14. The apparatus according to claim 13, wherein when the data switching apparatus comprises the switching frame, the switching frame comprises at least one line card corresponding to the at least one communication chip, and the at least one communication chip is disposed on the backplane respectively via the at least one line card.

15. A switching device, wherein the switching device comprises the data switching apparatus according to any one of claims 12 to 14.
